# NEW EUROPEAN PATENT SPECIFICATION

(11) **EP 1 385 590 B2**
(45) Date of publication and mention of the opposition decision: **03.03.2010**
(45) Mention of the grant of the patent: 06.04.2005
(21) Application number: 02742824.2
(22) Date of filing: 10.05.2002
(51) Int. Cl.: B01D 1/18, F26B 3/12, F26B 3/08

(54) **METHOD FOR DRYING A LIQUID OR A PASTE AND A DRYING PLANT THEREFOR**
VERFAHREN ZUM TROCKNEN EINER FLÜSSIGKEIT ODER EINER PASTE UND TROCKNUNGSANLAGE DAFÜR
PROCEDE DE SECHAGE D'UN LIQUIDE OU D'UNE PATE ET INSTALLATION DE SECHAGE CORRESPONDANTE

(30) Priority: 10.05.2001 DK 200100128
(43) Date of publication of application: 04.02.2004
(73) Proprietor: Simatek A/S, 4490 Jerslev S. (DK)
(72) Inventor: JENSEN, Arne, Gronbaek, DK-4480 St. Fuglede (DK)
(74) Representative: Andersen, Poul Hoeg
(86) International application number: PCT/DK2002/000307
(87) International publication number: WO 2002/089941

(56) References cited:
- WO-A1-00/74835
- WO-A1-00/76650

## Description

The invention relates to a method of drying liquid or paste containing a dry matter, said method comprising a drying procedure for an at least partially dried powder in a spray dryer, and a finishing treatment in a fluid bed.

The invention further relates to a drying plant for exercising this method, said drying plant comprising a spray drying device, and a fluid bed.

By a conventional method of drying liquid and paste with a content of dry matter, for instance a spray drying device is used that comprises a drying chamber wherein is performed, in one step, a complete drying of the liquid or the paste to a finished powder. Over time, many one-step drying plants of this type have subsequently been provided with a fluid bed, either for product considerations (influence of heat, crystallisation, further drying and/or other finishing treatment of the powder), or for financial reasons, it often being possible to improve the economy by multi-step drying. In many cases, a drying chamber will be provided with an internal fluid bed and/or a subsequent external fluid bed.

Apart from the fluid bed enabling final drying of the powder, the fluid bed can also be used for other finishing treatment of the powder, such as separation of coarse and fine particles, and they are consequently often used as separator combined with drying and/or cooling.

The process air used in connection with the spray drying and in the fluid bed is subsequently to be transmitted through a filter in order to prevent powder particles from being emitted to the surrounding environment. In this context it should be mentioned that in recent years filters, such as bag filters, have gained use as total separators instead of cyclones since it is hereby possible to improve the filtration of the process air.

Use of a filter or cyclones, however, means that - apart from the primary product produced in the drying and extracted from the fluid bed - a fraction will be produced from the filter and/or the cyclone. This fraction is of an inferior quality and often it cannot be interspersed with the primary product.

In those cases where the fraction - or at least a part thereof (the fines fraction) - can be reused and interspersed with the primary product, it is accomplished by dry mixture, which involves a high risk of dust formation and, additionally, such admixture of fraction renders the final product very inhomogeneous.

Finally, transportation of the completely dried product through channels, etc, to the filter by the conventional drying process means that a part of the dried particles break, thereby reducing the average particle size. This is usually undesirable.

Finally, it should also be mentioned that when production of foodstuffs is concerned, it is often required to have integral automated cleaning, eg CIP (cleaning-in-place).

It is the object of the invention to provide a method for drying a liquid or paste containing a dry matter, whereby many of the above-described drawbacks of the prior art are remedied. It is also an object to provide a drying plant for exercising the method.

This is obtained as defined in the appended claims 1 and 7 and, in particular, by configuring the method described above such that, already between the drying in a spray drying device, and the final finishing treatment in a fluid bed, the power is fed to a filter device that constitutes an active component of the drying process.

Hereby it is obtained that the filtration of powder/air is performed prior to the final finishing treatment, eg final drying of the powder, having taken place.

Hereby the particles are influenced to the effect that they agglomerate, crystallize more powerfully and/or dry before finishing treatment in the subsequent fluid bed.

When, in accordance with the invention, the final filtration of powder/air is performed at an earlier stage in the process - before the powder (flowing in the air) has accomplished its fully dried humidity, the higher humidity of the powder will improve the bonding of the dust particles. Hereby lower emission is accomplished, ie the amount of dust escaping through the filter, is reduced. It is moreover accomplished that the transport from the spray drying device, to the filter device is accomplished at higher moisture content, the powder not yet being fully dried. At higher humidity the particles are more elastic (less brittle) and they will therefore not be damaged so extensively by this transport, and consequently the average particle size can be kept at a desired high level.

Besides, by running the entire amount of air and product from the drying device through the filter device and the subsequent fluid bed, it is obtained that the entire amount of product is collected as primary product, which yields an improved end product compared to conventional plants, wherein a primary product is produced as well as a fraction from cyclone and/or filter which will then later optionally have to be dry-mixed. This also contributes to the end product obtainable with the method according to the invention also being more homogeneous compared to the end product known from the prior art that may optionally be interspersed.

Thus, the method according to the invention produces the effect that the entire product amount is of uniformly high quality for the following reasons:
- a separation with subsequent dry admixture is avoided;
- the additional handling, whereby the particles are destroyed, is avoided;
- the increased flow of product through the filter device gives the same dwelling time for all powder.

According to the invention the filter device is a bag filter with a number of filter bags that extend into a dust chamber, wherein the powder is conveyed from the drying device into the dust chamber of the bag filter. Such use of a bag filter between two drying steps (between the drying device and the fluid bed) results in product that is not yet completely dried dwelling in the bag filter and on the filter bags. Large particles will have a tendency to drop more quickly, whereas small particles will rather tend to settle on the bags. Hereby the particles that will be improved by agglomeration, ie the small particles, are separated off. The increased dwelling time in combination with the increased humidity (compared to the completely dried product) of these particles will enhance the agglomeration and thereby it improves the final product. This is particularly advantageous in case of powder that improves by crystallisation (eg lactose, sugar, fats, etc). Thus the filter becomes an active participant in the process, this increased dwelling time at high humidity leading to an increased crystallisation with an ensuing improved crystallised end product.

Use of a bag filter with filter bags may advantageously involve that, at regular intervals, a flushing air is provided rearwards through the filter bags. Hereby the particles that have agglomerated on the bags are "flushed off' and drop downwards to the fluid bed.

By the method according to the invention the finishing treatment of the powder in the fluid bed comprises one or more different processes. Preferably an additional drying of the powder is accomplished, but a cooling of the powder may equally be performed.

If a coating is desired, or further agglomeration, it is an option to subject the powder to spraying with liquid immediately above the fluid bed. Such liquid will typically be water or lecithin. The liquid can also be sprayed onto the filter bags so as to obtain an agglomeration, coating or crystallisation directly on the filter bags.

The object of the invention is also obtained by configuring a drying plant that comprises a spray-drying device, and a fluid bed, a filter device being provided between the drying device and the fluid bed.

By configuring a drying plant in this manner, it is possible to exercise the above-described method while obtaining said advantages with regard to the drying process and the quality of the end product.

According to a preferred embodiment of the drying plant, the fluid bed is an integral part of the filter device. This means that the powder is allowed to dwell longer in the combined filter devicelfluid bed, thereby enabling - in addition to improved overall drying efficiency (lower energy consumption) - an improved powder.

According to a particularly preferred embodiment, the filter device is a bag filter, and the fluid bed is configured at the bottom of the bag filter. In the following such unit consisting of a combined bag filter and a fluid bed will be designated by the term "filter bed". In the filter bed, dust and powder particles will settle either on the filter bags or sprinkle directly down to the bottom of the bag filter to the integral fluid bed, as described above. One advantage of a filter bed is that it saves energy over the prior art, since energy is consumed in the prior art for sucking the air contained in the powder through the filter as well as through a conventional fluid bed. In a filter bed one process step is saved, whereby the amount of energy used is reduced.

Advantageously, the bag filter is configured to provide, at regular intervals, a so-called "flushing air" rearwardly through the filter bags. Thereby powder particles that have settled on the filter elements are flushed off, and the flushed-off particles drop down towards the fluid bed. Such flushing air can be supplied to the filter bags one by one or a number of bags can be cleaned at a time. Single-bag cleaning, however, is associated with the advantage that the powder supply to the fluid bed becomes more uniform. This is important to the functioning of the fluid bed, since large amounts of powder at a time will create turbulence in the fluid bed with an ensuing risk of it overflowing, which would result in insufficient drying of the powder. Other cleaning methods are also applicable, such as shaking of the filter bags, ultra-sound cleaning, etc.

The fluid bed is preferably provided with a cylindrical piece above the strainer plate, thereby stabilising the fluidisation. A cone mounted higher up will reduce the upwardly oriented velocity of air, whereby a separation due to various air velocities would be obtained.

Besides, the fluid bed could also advantageously be provided with one or more permanently mounted or movable single or double nozzles for ejecting liquid. Such nozzles can spray a liquid (typically water or lecithin) onto the powder layer, following which a coating or further agglomeration takes place. The nozzles can be permanently mounted or movable with the requisite number of ball joints or pivoting joints, and one or more nozzles can further point in all directions. It will thus be possible to configure the nozzles in such a manner that the humidity on the bags can be controlled, such that an agglomeration, coating or crystallisation can be obtained directly on the filter bags.

When the powder is fluidised in the fluid bed, it is possible to obtain a well-defined dwelling time in the filter and hence an optimal finishing treatment of the powder by providing means for controlling the layer thickness of powder in the fluid bed. By such controlled dwelling time it is possible to obtain a drying and/or cooling of the powder, since more time is available for approximating a state of equilibrium. By regulating the amount, temperature and humidity of the fluidising air, it is possible to control powder/particle temperature and humidity very accurately.

Such means for controlling the layer thickness of powder in the fluid bed may comprise a spillway throttle that may optionally be adjustable in height. The powder layer will thus accumulate until the level of the throttle, following which it spills over the throttle and down into a powder emission conduit.

Finally, the fluid bed may optionally be provided with a movable device for stirring the powder in the fluid bed. Such stirrer may assist heavily fluidisable powders in being handled in the fluid bed.

Since such stirrer requires different torques depending on the degree of fluidisation, humidity, powder characteristics or for other reasons, the movable device for stirring may advantageously be provided with a torque meter, thereby enabling it to be used as measurement instrument to establish ia whether the fluidisation takes place as desired.

The invention will now be explained in further detail with reference to the drawing, wherein
Figure 1 shows a bag filter with an integral fluid bed, in the following designated "filter bed" for use in a drying plant according to the invention;
Figures 2a-2d show various configurations of the openings in a strainer plate used in a fluid bed; and
Figures 3A-3C show various configurations of a drying plant according to the invention.

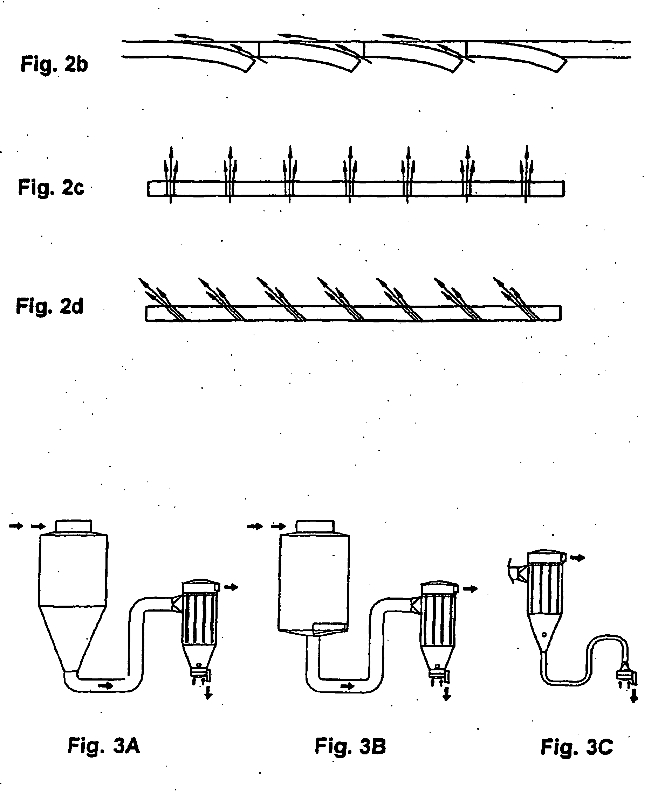

A drying plant according to the invention comprises a spray drying device separate from a filter, eg a bag filter, and a fluid bed or fluidising bottom that may optionally be built integrally with the filter. Three examples of such plants are shown in Figures 3A-3C. The product is conveyed from the drying device into the filter and then into the fluid bed.

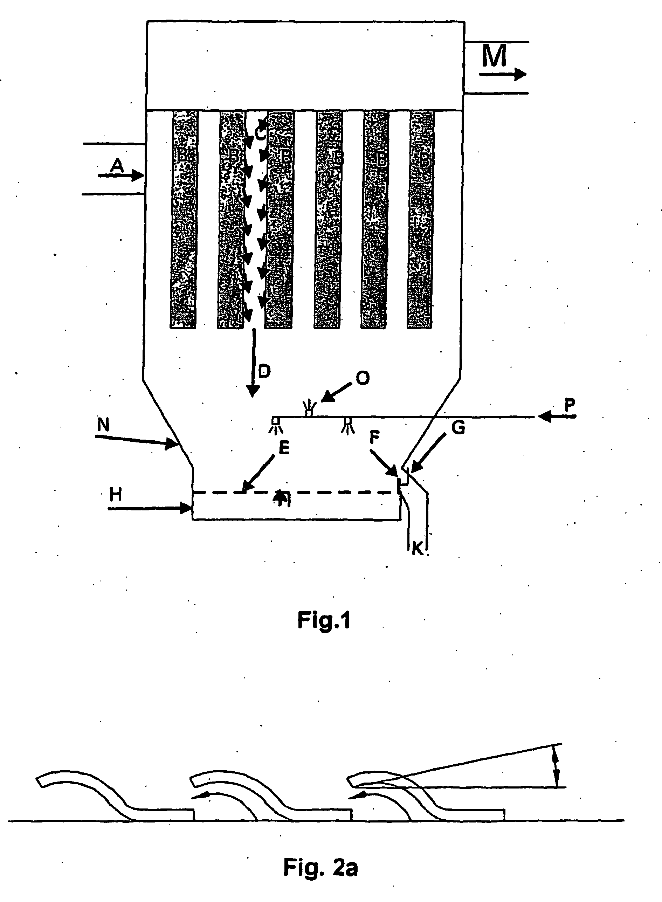

The fluid bed can be a separate unit that is located after the filter, or it may be built integrally with the bag filter, as shown in Figures 3A-3B. In the following, such combined unit is designated a ''filter bed", and besides one example of such filter bed is shown in enlarged scale in Figure 1.

With this novel type of drying plant that is provided with a filter bed, the powder/air filtration is carried out prior to the finishing treatment of the powder (eg a final drying). Thus the particles may be influenced to agglomerate, crystallise more strongly, or dry before the final drying in a subsequent fluid bed. Furthermore, integration of filter with fluid bed will result in a longer dwelling time in the filter bed which will in turn - in addition to an improved overall drying efficiency (lower energy consumption) - yield a superior powder.

In the filter bed, dust and powder particles will settle either on the filter elements (B) - see Figure 1 - or sprinkle directly down to the bottom of the filter (E) to the built-in fluid bed.

Dust or powder particles that have settled on the filter elements (B) are removed therefrom and the particles thus removed drop down (D) towards the fluid bed (E). In the exemplary embodiment shown in Figure 1, the bags are flushed one by one by air being blown rearwardly through the bags as outlined by the arrows (C). Alternatively several bags are cleaned at a time. Single-bag cleaning, however, is associated with the advantage that the powder supply to the fluid bed becomes more even. This is important to the functioning of the fluid bed, since large amounts of powder at a time would create turbulence in the fluid bed with a risk of it overspilling with an ensuing risk of insufficient drying of the powder. Other cleaning methods may also be applicable, such as shaking of the filter bags, ultra sound cleaning, etc.

A gas (typically the surrounding or conditioned air) is pressurised (relative to the pressure prevailing on the powder side of the filter) and conveyed to (H) the bottom of the fluid bed. The gas (in the following designated "the air") passes from the air-intake chamber underneath the strainer plate (E) and through the strainer plate (I). A pressure drop above the strainer plate (E) ensures uniform distribution of the air. The air that penetrates upwards through the strainer plate will fluidise the powder that drops down into the fluid bed.

When the powder is fluidised, it is possible to achieve a well-defined dwelling time in the filter. This increased dwelling time can be controlled eg by a spillway throttle (F) that may have varying height. In the embodiment shown in Figure 1, the powder layer may accumulate until the throttle height (F), following which it spills across the throttle (F) and down into the powder emission conduit (K). This can be employed by continuous emptying in a continuous process. By this controlled dwelling time it is possible to achieve a drying and/or cooling of the powder, since more time is achieved to approximate a state of equilibrium. By regulating amount, temperature and humidity of the fluidising air, it is possible to exercise very accurate control of powder/particle temperature and humidity.

The throttle height can be regulated in various ways, depending on the spillway throttle used. In its most simple configuration the throttle height can be regulated by a replacement of a higher or lower throttle. Alternatively the spillway throttle can be configured as a butterfly or feedgate damper that can be adjusted stepwise or steplessly for various heights. Such feedgate damper could be eg adjustable in operation, eg via a control system. It may be useful eg in case the filter bags have accumulated a certain amount of powder that is cleaned off quickly, whereby the supply rate of product to the fluid bed is increased.

When a filter bed is located after a spray, fluid bed or flash dryer, a further drying and/or cooling step is achieved. it will thereby be possible to build on a filter bed, eg following a one-step spray drying plant (albeit with conical or flat bottom and albeit round or rectangular) and to obtain a drying i several steps. Hereby it is possible to carry out a post-drying procedure following the primary drying. It is hereby possible to achieve improved drying economy and to increase the capacity of the plant without changing the drying chamber construction.

By the prior art methods the air/powder filtration is performed on a dry product. By locating a drying step after the filter bag filtration, one or more processes could happen on the filter bags, as will appear from the following.

A particular technical advantage resides in the increased dwelling time (the dwelling time of the product on the filter bags before final drying has been accomplished), in particular for powder that improves by crystallising (eg lactose, sugar, fats, etc.). Hereby the filter becomes an active participant in the process, since this increased dwelling time at increased humidity may entail eg an increased crystallisation with an ensuing superiorly crystallised end product.

When a filter bed is used as total separator following a spray drying device, a two-step drying procedure is achieved, whereby the filtration of product is accomplished between the two drying steps. This means that product not yet fully dried is caused to dwell in the filter and on the filter bags. Hereby an agglomeration is obtained on the bags.

Large particles will have a tendency to drop rather quickly, whereas smaller particles will, to an increasing degree, tend to settle on the bags. Hereby those particles that will improve by agglomeration, ie the small particles, will be separated off. The increased dwelling time in combination with the higher humidity (compared to the completely dried product) in these particles enhance the agglomeration and hence improve the final product.

When a filter bed is located after a one-step drying plant without separate powder discharge (see Figures 3A-3C), a two-step drying procedure is accomplished without an intermediate separation of a ''fines fraction". By omitting to perform this separation a more homogenous powder is accomplished, since a subsequent dry admixture is rendered superfluous.

The filtration of the product as such is improved by use of a filter bed, the powder being filtrated at an increased humidity. During drying increasing amounts of dust are produced, and a wet product emits less dust than a dry product. When the final powder/air filtration is performed at an earlier stage in the process - before the powder (flowing in the air) - has achieved its completely dried state, the increased humidity of the powder will increase the bonding of the dust particles. Hereby a lower is accomplished. This applies no matter which step in the drying plant is constituted by the filter bed.

If a curve was drawn of the powder (ie the dried material), where the dust emission capacity is shown as a function of the water content of the powder, it will appear that there is less dust for the bags to filtrate, since a larger amount of dust is bound to the material due to the increased humidity.

The filter bed also saves energy compared to the prior art, since - in the prior art - energy is used to draw the powder through the filter and through a conventional fluid bed. In a filter bed one process step is saved, whereby the energy consumption is reduced. Supply of so-called flushing air to the filter bags preferably takes place at a low pressure whereby energy is saved relative to prior art, which conventionally employs a higher pressure.

The filter bed can be provided with one or more single or double nozzles (O) - see Figure 1. The nozzles can be permanently mounted or movable with the requisite number of ball joints or pivoting joints. The nozzles may spray a liquid onto the powder layer (typically water or lecithin that is advanced via the pipeline (P)), following which a coating or agglomeration takes place. The nozzles may be configured to point in various directions. It will thus be possible to control the humidity on the bags in such a manner that an agglomeration, coating or crystallisation is achieved directly on the filter bags.

The filter bed can also be used for interspersing or admixing a product with or to the powder. By adding another product between spray dryer and filter bed, it may occur before the powder is completely dried. The increased dwelling time thus achieved - on the one hand in the conduit to the filter, on the other on the filter bags and in the fluid bed - will in some cases (depending on the nature of the product) have the effect that the added product participates in the agglomeration and thus bonds on the primary-product particles. In all cases an improved admixture is achieved, since the mixing occurs at an earlier stage in the drying phase.

The built-in fluid bed can be configured in other manners than shown schematically in Figure 1. For instance, it may be provided with a centrally located cone, whereby a fluid bed with a given area can be located higher up on the conical portion of the filter, whereby the total height of the filter bed is reduced.

Besides, the fluid bed can be attached to the filter by means of a flexible connection, whereby the fluid bed can be adjusted to shake or vibrate, whereby the handling of heavily fluidisable products is improved.

The fluid bed can also be configured as a live-bottom in a silo. Such device is provided with a vibration device that may be eg frequency-controlled.

Typically, the fluid bed will be suspended in movable bars, springs, rubber gas counter springs or the like.

Above the strainer plate of the fluid bed, a cylindrical piece is preferably located, as shown in Figure 1. This piece may contribute to stabilising the fluidisation. A cone mounted higher up would reduce the upwardly oriented air velocity, whereby a separation due to differences in air velocities would be obtained.

A movable device (eg a stirrer) can be located in the fluid bed. This stirrer may assist heavily fluidisable powders in being handled in the fluid bed. Such stirrer may also be provided with a torque meter. Since different torques are required depending on the degree of fluidisation, humidity and nature of powder, or on other factors, this movable device can be used as measurement instrument to establish ia whether the fluidisation takes place as desired.

The fluid bed can be configured insulated as well as non-insulated. Cold/heat bridges can hereby be completely or partially reinforced or eliminated as desired.

A fluid bed can be welded as well as flanged onto the filter. This allows for the provision of different fluid beds or other powder outlet devices on the same filter. Hereby production flexibility is obtained while simultaneously enabling cleaning of a fluid bed or powder outlet device while another one is mounted on the filter.

The fluid bed is provided with a strainer plate (I) that allows, on the one hand, air to flow there through and, on the other, supports the fluidised powder. The strainer plate can be mounted with the bracings necessary for the stability welded therein underneath the strainer plate, which bracings can furthermore be configured so as to act as "vortex breakers" for the air flow and thus contributes to a more even distribution thereof.

Strainer plates can alternatively be mounted loose with a device that ensures that they can be used as support for the fluidisation. The strainer plate can be mounted eg on a flange set that is clamped between a flange mounted on the filter housing (the filter cone) and the fluid bed support. The removable strainer plate can be useful in particular in case the filter bed does not have a built-in cleaning system. The strainer plates can hereby be taken out one by one and washed separately in a kind of "strainer plate washer".

The strainer plate can be manufactured without holes in the outermost edge, whereby it will be possible to mount the plate directly between the two flanges on the filter housing (filter cone) and the fluid bed bottom.

The strainer plate is provided with holes, whose configuration may determine the direction of the flow of air. Figure 2c shows a conventional strainer plate in its most simple configuration, where the holes extend perpendicular through the strainer plate.

However, it is also possible to allow the strainer plate to be provided with directionally specific holes that will contribute to improving the distribution of powder in the fluid bed. Figures 2a, 2b and 2d show examples of such strainer plates with directionally specific holes. By specifying the direction of the holes it is possible to generate a circulating movement or a number of local turbulences that may contribute to an improved contact between powder and air. Hereby an improved operational efficiency is obtained as regards drying, cooling and/or other powder/air process.

Directionally specific holes in the strainer plate may, according to their location, increase the degree and velocity of the auto-emptying effect. The holes in the strainer plate may eg be selected on the basis of the desire to obtain quicker emptying or the desire for a turbulent fluid bed in order to thereby reduce the risk of the fluidisation ceasing.

By a technique for mechanical manufacture of perforated plates, wherein each individual hole is located individually with regard to coordinate and angle, it is possible to select the location and orientation of the openings arbitrarily and thus for instance to manufacture entirely circular or annular plates with openings having any angle to radius for regulating the movement of the material and preventing depositions. Such plates that are not divided into sections have an appealing appearance, they are easy to clean and therefore particularly suitable for apparatuses, for which high demands to hygienic operation are made. The technique also involves that the openings can be located in various numbers per area unit.

The above-described plates can also advantageously be used in a filter bed for granulation, agglomeration and/or drying, since - in such processes - it is often a point of interest to obtain controlled movement of the product.

Both when it comes to circular and annular plates, the outermost row(s) of openings can be located in such a manner that the gas has a flow component that faces towards the sidewall of the apparatus. In this manner the dead zones or depositions of material in the transition between the bottom plate and the container wall are avoided.

Configuration of the holes in the strainer plate in accordance with a particular embodiment, wherein the base material is extruded as a tongue, an effect against through-fall is obtained. This is relevant in particular by use of relatively large holes that are associated with the advantage that the plate does not constipate so easily. One such plate is known from US patent No. 5,392,531, which is incorporated herein by the present reference.

In accordance with an exemplary embodiment the extruded part of the plate bends slightly downwards towards the plate, whereby an improved auto-cleaning effect is obtained (see Figure 2a).

In accordance with a further embodiment the holes are manufactured by pressing portions of the plate downwards at regular intervals, as shown in Figure 2b. The holes can be configured as "louvers", ie longitudinally extending openings, or be in the form of more conventional punctiform and essentially round holes. The advantage of this embodiment is that the air blown in will, to a wide extent, follow the surface of the strainer plate and contribute to the powder being blown away from the surface of the strainer plate.

In accordance with a third exemplary embodiment the holes are manufactured as inclined, preferably cylindrical holes in the strainer plate as shown in Figure 2d. Also with this embodiment, it is possible to obtain improved fluidisation without any still areas in the powder.

In all the configurations of the strainer plate shown in Figure 2a, 2b and 2d, the holes are directionally specific, which also means that they define a direction of transportation for the fluidised powder in the fluid bed. Besides the shown embodiments involve that through-fall of powder after the air has been shut off is reduced considerably relative to a strainer plate with openings that extend perpendicular to the strainer plate (Figure 2b).

The filter bed can advantageously be provided with a top-mounted cleaning hatch in the powder outlet (not shown), which cleaning hatch provides access to the powder outlet during operation as well as during standstill. A transparent plate can be incorporated, in cases where the pressure differences are too large for the cleaning hatch to be opened in operation, whereby it is possible to perform a visual inspection in operation. Build-in light sources may ensure that there is sufficient light for the desired inspection. An integral vertical sight glass from about strainer plate height and upwards may further serve to ensure that it is possible from the outside to monitor whether the fluidisation process proceeds as desired.

Built-in cleaning hatches (not shown) level with the powder layer as well as above the level of the powder layer may ensure access to the interior side of the filter bed. Optionally a rubber glove is integrated therein in case excessive pressure differences or other - optionally - sanitary reasons give rise thereto.

Besides, it is an option to build in manual or automatic powder sampling outlets in the outlet or the fluid bed as such, and, likewise, it is possible to build in temperature measurement devices and optionally other measurement devices below, in and above the fluid bed and the fluidised powder layer.

The filter bed can also be provided with automatic, integrated CIP cleaning of filter and fluid bed, whereby operating economies in the form of reduced down time during cleaning of the filter bed are accomplished. Without an integrated cleaning system, all bags and baskets must be removed from the filter and cleaned manually.

Finally the filter bed can be constructed to participate in either a continuous process or a batch process, and, likewise, it can be configured for sampling a fraction flow of the powder that can be returned to a spray dryer or a fluid bed for agglomeration or some other process. This fraction flow can be extracted in the fluid bed proper or in connection with the outlet.

## Claims

1. A method of drying liquid or paste containing a dry matter, said method comprising the following successive steps:
- drying in a spray drying device, until at least a partially dried powder is obtained;
- supplying the entire amount of air and powder from the drying device to a filter device separate from the drying device, the filter device being a bag filter with a number of filter bags that project into a dust chamber; the powder being conveyed from the drying device so that it enters the dust chamber of the filter device at a height position at the upper part of the filter bags; and
- finishing treatment of the powder in a fluid bed.

2. A method according to claim 1, **characterised in that**, at regular intervals, a flushing air is provided rearwardly through the filter bags.

3. A method according to any one of claims 1 or 2, **characterised in that** the powder is dried in the fluid bed.

4. A method according to any one of claims 1-3, **characterised in that** the powder is cooled in the fluid bed.

5. A method according to any one of claims 1-4, **characterised in that**, immediately above the fluid bed, liquid is sprayed across the powder for obtaining an enhanced agglomeration of the powder.

6. A method according to any one of claims 1-5, **characterised in that**, immediately above the fluid bed, liquid is sprayed across the powder for obtaining a coating of the powder.

7. A drying plant for drying liquid or paste containing a dry matter, which drying plant comprises a spray drying device, and a fluid bed, **characterised in that**, between the drying device and the fluid bed, a filter device separate from the drying device is provided, said filter device being connected to said drying device in such manner that the entire amount of air and powder from the drying device will be supplied to the filter device, the filter device being a bag filter with a number of filter bags that project into a dust chamber; the powder being conveyed from the drying device so that it enters the dust chamber of the filter device at a height position at the upper part of the filter bags.

8. A drying plant according to claim 7, **characterised in that** the fluid bed is an integrated part of the filter device.

9. A drying plant according to claim 8, **characterised in that** the fluid bed is configured at the bottom of the bag filter.

10. A drying plant according to claim 9, **characterised in that** the bag filter is configured to provide, at regular intervals, flushing air rearwardly through the filter bags.

11. A drying plant according to claim 9 or 10, **characterised in that** the fluid bed is provided with a cylindrical piece across the strainer plate.

12. A drying plant according to any one of claims 7-11, **characterised in that** the fluid bed is provided with one or more permanently mounted or movable single or double nozzles for ejecting liquid.

13. A drying plant according to any one of claims 7-12, **characterised in that** means are provided for controlling the layer thickness of powder in the fluid bed.

14. A drying plant according to claim 13, **characterised in that** said means comprise a spillway throttle.

15. A drying plant according to claim 14, **characterised in that** the spillway throttle is adjustable in height.

16. A drying plant according to any one of claims 7-15, **characterised in that** the fluid bed is provided with a movable device for stirring the powder in the fluid bed.

17. A drying plant according to claim 16, **characterised in that** the movable device for stirring is provided with a torque meter.

## Patentansprüche

1. Verfahren zum Trocknen einer Trockenmaterial enthaltenden Flüssigkeit oder Paste, mit folgenden nacheinander erfolgenden Schritten:
- Trocknen in einer Sprühtrocknungsvorrichtung, bis ein zumindest teilweise getrocknetes Pulver entstanden ist;
- Zuführen der gesamten Luft- und Pulvermenge von der Trocknungsvorrichtung zu einer von der Trocknungsvorrichtung getrennten Filtervorrichtung; wobei die Filtervorrichtung ein Beutelfilter mit einer Anzahl von Filterbeuteln ist, die in eine Staubkammer vorstehen, wobei das Pulver derart aus der Trocknungsvorrichtung heraus gefördert wird, dass es in die Staubkammer der Filtervorrichtung an einer am oberen Teil der Filterbeutel gelegenen Höhenposition eintritt; und
- Endbehandeln des Pulvers in einem Fluidbett.

2. Verfahren nach Anspruch 1, **dadurch gekennzeichnet, dass** in regelmäßigen Abständen Spülluft in Rückwärtsrichtung durch die Filterbeutel geführt wird.

3. Verfahren nach einem der Ansprüche 1 oder 2, **dadurch gekennzeichnet, dass** das Pulver in dem Fluidbett getrocknet wird.

4. Verfahren nach einem der Ansprüche 1-3, **dadurch gekennzeichnet, dass** das Pulver in dem Fluidbett gekühlt wird.

5. Verfahren nach einem der Ansprüche 1-4, **dadurch gekennzeichnet, dass** unmittelbar oberhalb des Fluidbetts eine Flüssigkeit auf das Pulver gesprüht wird, um eine verbesserte Agglomerierung des Pulvers zu bewirken.

6. Verfahren nach einem der Ansprüche 1-5, **dadurch gekennzeichnet, dass** unmittelbar oberhalb des Fluidbetts eine Flüssigkeit auf das Pulver gesprüht wird, um das Pulver zu benetzen.

7. Trocknungsanlage zum Trocknen einer Trockenmaterial enthaltenden Flüssigkeit oder Paste, mit einer Sprühtrocknungsvorrichtung und einem Fluidbett, **dadurch gekennzeichnet, dass** zwischen der Trocknungsvorrichtung und dem Fluidbett eine von der Trocknungsvorrichtung getrennte Filtervorrichtung vorgesehen ist, die derart mit der Trocknungsvorrichtung verbunden ist, dass die gesamte Luft- und Pulvermenge von der Trocknungsvorrichtung zu der Filtervorrichtung transportiert wird, wobei die Filtervorrichtung ein Beutelfilter mit einer Anzahl von Filterbeuteln ist, die in eine Staubkammer vorstehen, wobei das Pulver derart aus der Trocknungsvorrichtung heraus gefördert wird, dass es in die Staubkammer der Filtervorrichtung an einer am oberen Teil der Filterbeutel gelegenen Höhenposition eintritt.

8. Trocknungsanlage nach Anspruch 7, **dadurch gekennzeichnet, dass** das Fluidbett integraler Bestandteil der Filtervorrichtung ist.

9. Trocknungsanlage nach Anspruch 8, **dadurch gekennzeichnet, dass** das Fluidbett am unteren Teil des Beutelfilters ausgebildet ist.

10. Trocknungsanlage nach Anspruch 9, **dadurch gekennzeichnet, dass** das Beutelfilter derart ausgeführt ist, dass in regelmäßigen Abständen Spülluft in Rückwärtsrichtung durch die Filterbeutel geführt wird.

11. Trocknungsanlage nach Anspruch 9 oder 10, **dadurch gekennzeichnet, dass** das Fluidbett mit einem zylindrischen Teil an der Siebplatte versehen ist.

12. Trocknungsanlage nach einem der Ansprüche 7-11, **dadurch gekennzeichnet, dass** das Fluidbett mit einer oder mehreren fest angebrachten oder beweglichen Einzel- oder Doppeldüsen zum Einspritzen von Flüssigkeit versehen ist.

13. Trocknungsanlage nach einem der Ansprüche 7-12, **dadurch gekennzeichnet, dass** Einrichtungen zum Steuern der Schichtdicke des Pulvers in dem Fluidbett vorgesehen sind.

14. Trocknungsanlage nach Anspruch 13, **dadurch gekennzeichnet, dass** die Einrichtungen eine Überlaufdrossel aufweisen.

15. Trocknungsanlage nach Anspruch 14, **dadurch gekennzeichnet, dass** die Überlaufdrossel höhenverstellbar ist.

16. Trocknungsanlage nach einem der Ansprüche 7-15, **dadurch gekennzeichnet, dass** das Fluidbett mit einer beweglichen Vorrichtung zum Durchrühren des Pulvers in dem Fluidbett versehen ist.

17. Trocknungsanlage nach Anspruch 16, **dadurch gekennzeichnet, dass** die zum Durchrühren vorgesehene bewegliche Vorrichtung einen Drehmomentmesser aufweist.

## Revendications

1. Procédé de séchage d'un liquide ou d'une pâte contenant une matière sèche, ledit procédé comprenant les étapes successives suivantes:
- sécher dans un dispositif de séchage à pulvérisation, jusqu'à l'obtention d'une poudre au moins partiellement séchée;
- amener la quantité entière d'air et de poudre du dispositif de séchage à un dispositif formant filtre séparé du dispositif de séchage, le dispositif formant filtre étant un filtre à sac avec un nombre de sacs de filtration qui font saillie dans une chambre de poussière; la poudre étant convoyée du dispositif de séchage de sorte qu'elle entre dans la chambre de poussière du dispositif formant filtre à une position en hauteur à la partie supérieure des sacs de filtration; et
- finir le traitement de la poudre dans un lit fluidisé.

2. Procédé selon la revendication 1, **caractérisé en ce que**, à des intervalles réguliers, de l'air de rinçage est amené de l'arrière à travers les sacs de filtration.

3. Procédé selon l'une dès revendications 1 ou 2, **caractérisé en ce que** la poudre est séchée dans le lit fluidisé.

4. Procédé selon l'une des revendications 1 à 3, **caractérisé en ce que** la poudre est refroidie dans le lit fluidisé.

5. Procédé selon l'une des revendications 1 à 4, **caractérisé en ce que**, directement au-dessus du lit fluidisé, du liquide est pulvérisé sur la poudre pour obtenir une plus grande agglomération de la poudre.

6. Procédé selon l'une des revendications 1 à 5, **caractérisé en ce que**, directement au-dessus du lit fluidisé, le liquide est pulvérisé sur la poudre pour obtenir un revêtement de la poudre.

7. Installation de séchage pour le séchage d'un liquide ou d'une pâte contenant une matière sèche, ladite installation de séchage comprenant un dispositif de séchage à pulvérisation, et un lit fluidisé, **caractérisée en ce que**, entre le dispositif de séchage et le lit fluidisé, un dispositif formant filtre séparé du dispositif de séchage est réalisé, ledit dispositif formant filtre étant relié audit dispositif de séchage de telle manière que toute la quantité d'air et de poudre du dispositif de séchage sera amenée au dispositif formant filtre, le dispositif formant filtre étant un filtre à sac avec un nombre de sacs de filtration qui font saillie dans une chambre de poussière; la poudre étant convoyée du dispositif de séchage de sorte qu'elle entre dans la chambre de poussière du dispositif formant filtre à une position en hauteur à la partie supérieure des sacs de filtration.

8. Installation de séchage selon la revendication 7,
**caractérisée en ce que** le lit fluidisé constitue une partie intégrée du dispositif formant filtre.

9. Installation de séchage selon la revendication 8, **caractérisée en ce que** le lit fluidisé est configuré au fond du filtre à sac.

10. Installation de séchage selon la revendication 9, **caractérisée en ce que** le filtre à sac est configuré pour fournir, à des intervalles réguliers, de l'air de rinçage vers l'arrière à travers les sacs de filtration.

11. Installation de séchage selon la revendication 9 ou 10, **caractérisée en ce que** le lit fluidisé présente une pièce cylindrique sur la plaque de filtre.

12. Installation de séchage selon l'une des revendications 7 à 11, **caractérisée en ce que** le lit fluidisé présente une ou plusieurs buses simples ou doubles installées de manière permanente ou mobile pour éjecter du liquide.

13. Installation de séchage selon l'une des revendications 7 à 12, **caractérisée en ce que** des moyens sont prévus pour régler l'épaisseur de la couche de poudre dans le lit fluidisé.

14. Installation de séchage selon la revendication 13, **caractérisée en ce que** lesdits moyens comprennent une soupape d'étranglement de déversement.

15. Installation de séchage selon la revendication 14, **caractérisée en ce que** la soupape d'étranglement de déversement est ajustable en hauteur.

16. Installation de séchage selon l'une des revendications 7 à 15, **caractérisée en ce que** le lit fluidisé présente un dispositif mobile pour agiter la poudre dans le lit fluidisé.

17. Installation de séchage selon la revendication 16, **caractérisée en ce que** le dispositif mobile pour l'agitation est pourvu d'un organe de mesure de couple.
